# EUROPEAN PATENT APPLICATION

(11) **EP 1 401 166 A1**
(43) Date of publication of application: **24.03.2004**
(21) Application number: 03103409.3
(22) Date of filing: 16.09.2003
(51) Int. Cl.: H04L 25/49, H04B 10/00, H04B 10/10

(54) **Method and Device for transmitting speech and music data using return-to-zero-signals**

(30) Priority: 18.09.2002 JP 2002271100
(71) Applicant: Nippon Telegraph and Telephone Corporation, Tokyo (JP)
(72) Inventor: MATSUYA, Yasuyuki NNTT Int. Prop. Center, TOKYO (JP)
(74) Representative: Poulin, Gérard

(57) **Abstract**

A data communication method, a data transmitting apparatus, a data receiving apparatus, and a data transmission program are provided which do not cause the problem of jitter being generated by a combination of a 1-bit noise shaping A/D converter and on-off keying using infrared rays. In a data transmitting apparatus, analog signals comprising voice or music or signals obtained by digitizing these are converted using a noise shaping method into non-return-to-zero digital signals formed by 1-bit data streams. For converted digital signals of "1", return-to-zero signals having a pulse width smaller than that of non-return-to-zero signals are generated and are converted into radio signals and transmitted. For converted digital signals of "0", return-to-zero signals allocated a low level are converted into radio signals and transmitted. A data receiving apparatus receives these radio signals and drives a sound output section to output sound signals.

## Description

### BACKGROUND OF THE INVENTION

### Field of the Invention

The present invention relates to a small sized communication apparatus that can be fitted at all times on a body without any discomfort and that transmits and receives analog data such as voice signals. In particular, the present invention relates to the lowering of power consumption of a system that converts musical sounds such as voice and music into digital signals and then transmits them by infrared rays and the like, and also to the raising of the quality of the transmission of voice by this system.

### Description of the Related Art

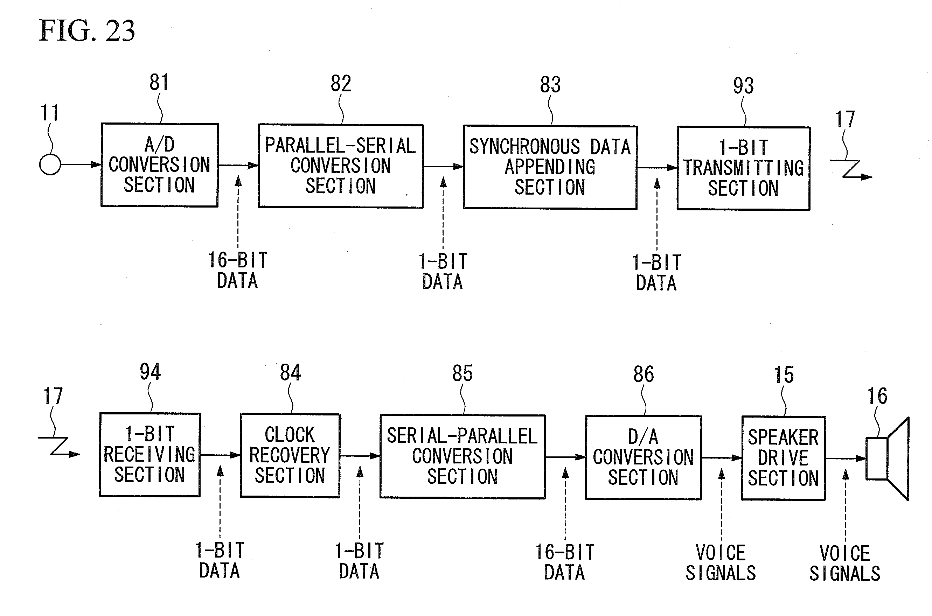

Conventionally, in order to communicate analog signals such as voice, music, and other types of fluctuating measured values as digital signals, a device such as that shown in FIG. 23 has been necessary. Namely, in this conventional device a structure is employed in which digital data is transmitted via a 1-bit communication vehicle 17 using an A/D conversion section 81, a parallel - serial conversion section 82, a synchronous data appending section 83, and a 1-bit transmitting section 93. Received digital data is output as voice or music using a 1-bit receiving section 94, a clock recovery section 84, a serial - parallel conversion section 85, a D/A conversion section 86, a speaker drive section 15, and (in the case of voice signals) a speaker 16. Here, the A/D conversion section 81 samples input analog voice signals (the voice signals 11) at fixed time intervals, and outputs the voltage value of one interval as an approximately 16-bit (described below as being 16-bit) binary code. The parallel - serial conversion section 82 converts 16-bit parallel binary code output from the A/D conversion section 81 into a 16-bit serial data stream. If the A/D conversion section 81 itself outputs binary code in a serial 1-bit data stream, the parallel - serial conversion section 82 is not needed.

Here, an example of a 16-bit serial data stream is shown in FIG. 24. Because D15 to D0 of this data stream form data of a single group, they must be separated from adjacent groups. Therefore, delimiters, namely, synchronization signals, are appended to the front and back of this single group of data by the synchronous data appending section 83. As shown by Standard RS232, simple examples of this appending of synchronous data include a method in which two bits indicating a start position are appended to the front of D15, while one bit indicating a stop position is appended to the back of D0. Another method is one in which several items of data are grouped together to form a frame, and data indicating the frame position is appended to the front of the frame as a frame synchronization signal. Various modulations, such as frequency shift keying (FSK) and on-off-keying are performed sequentially by the 1-bit transmitting section 93 on serial data streams to which this synchronous data has been appended, and they are emitted via a medium such as electromagnetic waves onto a transmission path, namely, into space which serves as the 1-bit communication vehicle 17.

On the receiving side, the electromagnetic waves or the like that are emitted into space are received by the 1-bit receiving section 94 and the received signals are demodulated using the same demodulation format that was used by the transmitting side. As a result, the same serial data stream is obtained that was output from the synchronous data appending section 83 on the transmitting side. Next, start position indication bits and a stop position indication bit contained in this serial data stream are recognized by the clock recovery section 84, and the data D15 to D0 between these position indication bits is output as the data of single group. Next, the data of this single group is restored to being 16-bit parallel binary data by the serial - parallel conversion section 85, and this data is then converted into analog signals by the D/A conversion section 86. Thereafter, if these analog signals are voice signals, for example, they are input into the speaker drive section 15 formed by speaker drive amplifier or the like, and the speaker 16 is driven by the speaker drive section 15 so that sound is obtained. Here, circuits or hardware to realize each of these sections has already been announced publicly or is already in common use.

As stated above, a conventional communication device for analog data such as voice signals that uses a digital format has the structure shown in FIG. 23 and, consequently, has the following two problems.

The first problem is that the size of the circuitry on the receiving side is large. In order to detect synchronous bits it is necessary to perform data processing such as synchronous pattern matching operations and the like. Moreover, in order to correctly receive data it is necessary to create clocks on the receiving side that are synchronized with clocks on the transmitting side from the data received using a synchronous circuit such as a phase locked loop (PLL). Because of this, a timing synchronous circuit such as a PLL circuit or a synchronous signal pattern matching circuit becomes necessary. Furthermore, because the D/A converter is needed to convert binary data into analog signals, the circuit size on the receiving side is enlarged and the power consumption thereof increases.

The second problem is that accurate clock recovery and synchronization timing extraction are necessary. In this type of data communication system, the clocks on the transmitting side must be perfectly synchronous with the clocks on the receiving side. If these clocks are even slightly mismatched, then, at some point, data duplications or omissions such as sampling duplication or data skipping are generated, causing data errors to occur. Even if the clocks are perfectly synchronized, if there is an error in the recognition of the synchronous pattern, then the data of a single group is received from partway through that group, which is also a data error.

In this manner, in a conventional communication system, it is necessary to deal with binary data as data of single groups, and the clock recovery sections that include synchronization protection and the like used for this have brought about increased circuit size and error generation. To counter this, conventionally, error generation has been prevented by raising the performance of the clock recovery sections.

In order to solve the above-described problems in the digital transmission of analog data such as voice, and to achieve high performance data communication with a simpler circuit structure and fewer errors, technology for converting voice and the like into single bits using noise shaping and transmitting these by infrared rays is disclosed in Japanese Unexamined Patent Application, First Publications Nos. Hei 8-37502, Hei 5-130041, and the like.

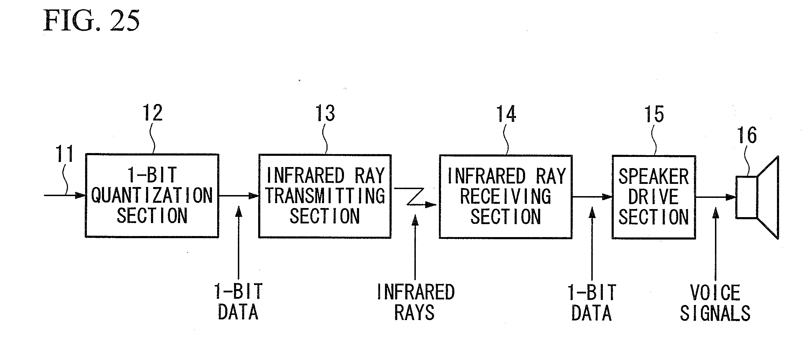

FIG. 25 shows the structure of the data communication systems disclosed in these publications. Such systems are formed by a 1-bit quantization section 12 that performs noise shaping on input voice signals 11, an infrared ray transmitting section 13, an infrared ray receiving section 14, a speaker drive section 15, and a speaker 16.

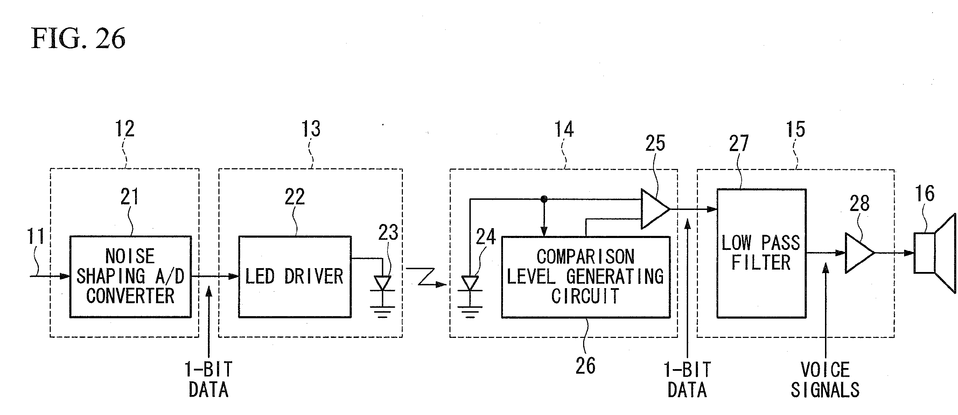

More specifically, as is shown in FIG. 26, the 1-bit quantization section 12 is formed by a noise shaping A/D converter 21; the infrared ray transmitting section 13 is formed by an infrared ray light emitting diode (LED) 23 and an LED driver 22; the infrared ray receiving section 14 is formed by a photo-diode 24, a voltage comparator 25, and a comparison level generating circuit 26; and the speaker drive section 15 is formed by a low pass filter 27 and a power amplifier (drive AMP) 28.

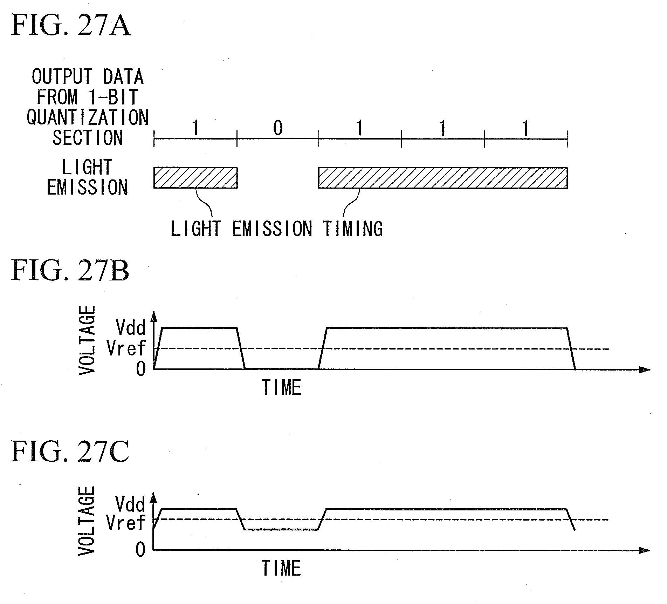

The LED driver 22 performs on-off-keying by infrared rays which involves the LED driver 22 causing the infrared ray LED 23 to emit light when an output from the noise shaping A/D converter 21 is "1", and causing the infrared ray LED 23 to not emit light when an output from the noise shaping A/D converter 21 is "0". As a result, as is shown in FIG. 27A, the infrared ray LED 23 emits light for light emission timing where the data is "1", and does not emit light for light emission timing where the data is "0". At this time, as is shown in FIG. 27B, the output voltage of the photo-diode 24 of the infrared ray receiving section 14 swings at a large amplitude when the transmitting section and the receiving section are close to each other and a large quantity of light is received by the receiving section, and, as is shown in FIG. 27C, swings at a small amplitude when the transmitting section and the receiving section are far from each other and a small quantity of light is received by the receiving section.

At this time, in order for the data received by the voltage comparator 25 to be correctly determined as "0" or "1", it is necessary to set a reference voltage Vref in the vicinity of the center of the signal amplitude to make a comparison. This reference voltage Vref is an average voltage of the output voltages of the photo-diode 24 that is generated in the comparison level generating circuit 26.

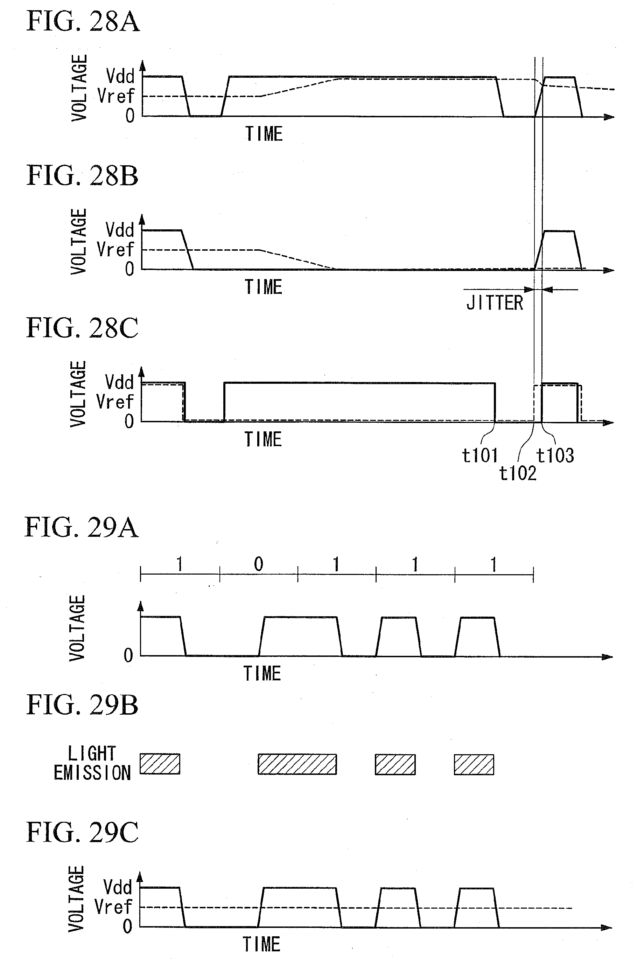

However, problems occur when identical data is input continuously into the infrared ray transmitting section 13 over an extended period of time. Firstly, if "1" is input continuously, then the resulting relationship between the output of the photo-diode 24 of the infrared ray receiving section 14 and the reference voltage Vref is shown in FIG. 28A. As can be seen from FIG. 28A, the reference voltage Vref when "1" is continuously input (the broken line in the drawings) approaches Vdd, which is the voltage of the logical "1". In contrast, as is shown in FIG. 28B, the reference voltage Vref when "0" is continuously input (the broken line in the drawings) approaches 0V, which is the voltage of the logical "0".

Consequently, when the data "01" is input at the timing t101 1 and thereafter, the timing of the detection of the data "1" by the voltage comparator 25 in FIG. 28A (i.e., the timing t103) does not match the timing of the detection in FIG. 28B (i.e., the timing t102). Therefore, the width of a pulse output from the voltage comparator 25 is different in FIG. 28B than it is in FIG. 28A, leading to the jitter shown in FIG. 28C being generated. Note that in FIG. 28C, the solid line shows a voltage waveform output from the voltage comparator in the case of FIG. 28A, while the broken line shows a voltage waveform output from the voltage comparator in the case of FIG. 28B.

Generally, in a noise shaping A/D converter, the same data is not generated continuously over an extended period of time, and, even if the same data were generated continuously over an extended period of time, there would be no problem with the transmission of voice with the quality of a normal telephone. However, in the transmission of high quality signals such as in high-fidelity audio systems and the like, this jitter becomes noise and degrades the signal quality. Because of this, the combination of on-off-keying by infrared rays with a 1-bit noise shaping A/D converter disclosed in Japanese Unexamined Patent Application, First Publications Nos. Hei 8-37502 and Hei 5-130041 has the problem that, although the transmission of voice signals is possible, the transmission of high quality music signals and the like is not possible.

In the field of communications, however, Manchester code is used to solve the above described problem. As is shown in FIGS. 29A and 29B, in Manchester code, for a logical value "1" light is caused to be emitted from a light emitting diode as a high level signal is input for the timing of the first half of the emission, while, for the timing of the second half of the emission, light is not emitted from the light emitting diode with a low level signal being input. For a logical value "0" light is not emitted from the light emitting diode as a low level signal is input for the timing of the first half of the emission, while, for the timing of the second half of the emission, light is caused to be emitted from the light emitting diode with a high level signal being input. By employing this system, the output shown in FIG. 29C can be obtained as the output of a photo-diode. Because the low level period and high level period of the output of the photo receiving diode are the same for both the logical value "1" and the logical value "0", not only if the same code ("0" or "1) is continuous but also even if the same code is not continuous, the reference voltage Vref is always Vref = Vdd/2 and the aforementioned jitter is not generated.

However, voice transmission that uses code converted using noise shaping is based on a process in which, on the receiving side, a high level signal is obtained for "1" and a low level signal is obtained for a "0", and filter processing is performed on the signals thus obtained so as to provide a voice signal. Therefore, the waveform shown in FIG. 29C ends up being received as a result of the voice transmission so that it is not possible to reproduce the original voice. Namely, because the signals shown in FIG. 29C end up as direct current signals even if they are passed through a low pass filter, the voice cannot be reproduced. Therefore, it is necessary to convert them into the signals described above (see FIG. 28C) by performing a decoding process at the receiving side using a decoder.

In this way, the conventional technology that performs transmission by the on-off keying of voice using noise shaping has the drawback that the transmission quality is deteriorated due to jitter being generated in the waveforms of received signals. Moreover, if a technology such as Manchester coding, which suppresses jitter that is generated when the same code occurs continuously, is used together with the above technology, as is used in wireless communication and the like, the drawbacks arise that a decoder is required on the receiving side, and the size of the circuitry on the receiving side increases as does the amount of power consumed.

### SUMMARY OF THE INVENTION

The present invention was conceived in view of the above drawbacks and it is an object thereof to provide a data communication method, a data transmitting apparatus, data receiving apparatus, and a data transmission program that provide a solution to the problem of jitter that is generated by a combination of a conventional 1-bit noise shaping A/D converter with on-off-keying using infrared rays, without bringing about any increase in the size of the circuitry or in power consumption on the receiving side.

In order to solve the above problems, the data communication method of the present invention is one in which, on a transmitting side, converting analog signals comprising voice or music or digital signals obtained by digitizing voice or music into non-return-to-zero digital signals formed by 1-bit data streams using a noise shaping method; on the transmitting side, using a high level for converted digital signals of "1" and using a low level for converted digital signals of "0", and when a high level is used the converted digital signals are converted into return-to-zero signals having a pulse width smaller than the pulse width of non-return-to-zero signals and then the return-to-zero signals are output, and when a low level is used the converted digital signals are output as they are at a low level; on the transmitting side, transmitting the output signals as radio signals; and on a receiving side, receiving the radio signals from the transmitting side; and on the receiving side, driving a musical sound output section by electrical signals obtained from the received signals so as to convert the electrical signals into musical sound signals.

The data transmission apparatus of the present invention comprises: a 1-bit conversion section that converts analog signals comprising voice or music or digital signals obtained by digitizing voice or music into non-return-to-zero digital signals formed by 1-bit data streams using a noise shaping method; a return-to-zero section that uses a high level for converted digital signals of "1" and a low level for converted digital signals of "0", and for a high level converts the converted digital signals into return-to-zero signals having a pulse width smaller than the pulse width of non-return-to-zero signals and then outputs the return-to-zero signals, and for a low level outputs the converted digital signals as they are at a low level, and a radio transmitting section that outputs the return-to-zero digital signals as radio signals.

The data receiving apparatus of the present invention comprises: a radio receiving section that receives by radio return-to-zero digital signals obtained by converting analog signals comprising voice or music or digital signals obtained by digitizing voice or music into digital signals formed by 1-bit data streams, and in which for a logic value of "0" a low level is allocated, while for a logic value of "1" a high level having a pulse width smaller than the pulse width of non-return-to-zero signals is allocated; a musical sound output section that converts electrical signals into musical sound signals; and a drive section that generates return-to-zero drive signals as the electrical signals to drive the musical sound output section based on the return-to-zero digital signals received by the radio receiving section.

As described above, in the conventional technology in which 1-bit data that has been noise shaped is transmitted and received by the on-off keying of infrared rays, the occurrence of jitter is unavoidable, however, because it is possible to reduce jitter considerably using the present invention, high quality voice transfer is made possible using infrared rays or the like, and a huge reduction in power consumption can be obtained compared with the conventional technology.

In the above data transmitting apparatus, the radio transmitting section may be an infrared ray transmitting section that transmits the return-to-zero digital signals in accordance with the physical layers of Fast IrDA Physical Layer (FIR), which is a digital infrared ray communication standard. In the above data receiving apparatus, the radio receiving section may be an infrared ray receiving section that receives by radio the return-to-zero digital signals in accordance with physical the layers of FIR. As a result, simply by using infrared ray transmitting and receiving sections such as IrDA transmitters and receivers as radio transmitting and receiving sections, it is possible to remove signals from other devices that communicate in accordance with standards other than IrDA-FIR by using standardized filters in the IrDA receiver. This enables malfunctions arising from interference from the other devices to be prevented beforehand.

In the above data transmitting apparatus, the return-to-zero section may make the pulse width of the return-to-zero digital signals for the high level between 5% or more and less than 40% of the pulse width of non-return-to-zero signals. As a result, an even better noise suppression effect can be obtained.

In the above data receiving apparatus it may further provide a pulse width extension section that extends pulse widths of high level drive signals that have a pulse width of less than 100% of the pulse width of high level non-return-to-zero signals to a pulse width of 100% that of the non-return-to-zero signals or a pulse width near to 100% that of the non-return-to-zero signals, and then outputs them to the drive section. By employing this structure, the pulse width of high level non-return-to-zero signals transmitted from the data transmitting apparatus to the data receiving apparatus can be made smaller so as to reduce jitter, while at the same time by widening the pulse width of return-to-zero signals received in the data receiving apparatus, because the amplitude value of drive signals of a musical sound output section such as a speaker are enlarged, a larger sound pressure can be obtained.

In the above data receiving apparatus it may further provide a filter section having a high pass filter that removes a DC component contained in the drive signals, and a low pass filter that removes shaping noise signal components in a vicinity of voice signal components contained in the drive signals. By employing this structure, it is possible to remove a DC component and to reduce power consumption to an extremely small amount. In addition, it is possible to remove the effects caused by shaped quantized noise distributed in the vicinity of voice signal components.

The data transmission program of the present invention comprises: a zero insertion function in which a number p (wherein p is a natural number) of data representing "0" data are inserted for each bit in a 1-bit data stream obtained by performing noise shaping processing on analog signals comprising voice or music or digital signals obtained by digitizing voice or music; and a transmission function in which, by sending 1-bit data streams in which the "0" have been inserted at a speed of (p + 1) times a noise shaping frequency used by the noise shaping processing to a radio transmitting section, return-to-zero digital signals are transmitted in which the pulse width at high level is { 100/ (p + 1) } % the pulse width at high level of non-return-to-zero signals. By employing this structure, it is possible to obtain a data transmitting apparatus by using software operating on a computer such as a personal computer that is provided with a radio transmitting section such as an IrDA transmitter without having to provide special hardware.

### BRIEF DESCRIPTION OF THE DRAWINGS

FIG. 1 is a block diagram showing the structure of a data communication system according to the first embodiment of the present invention.

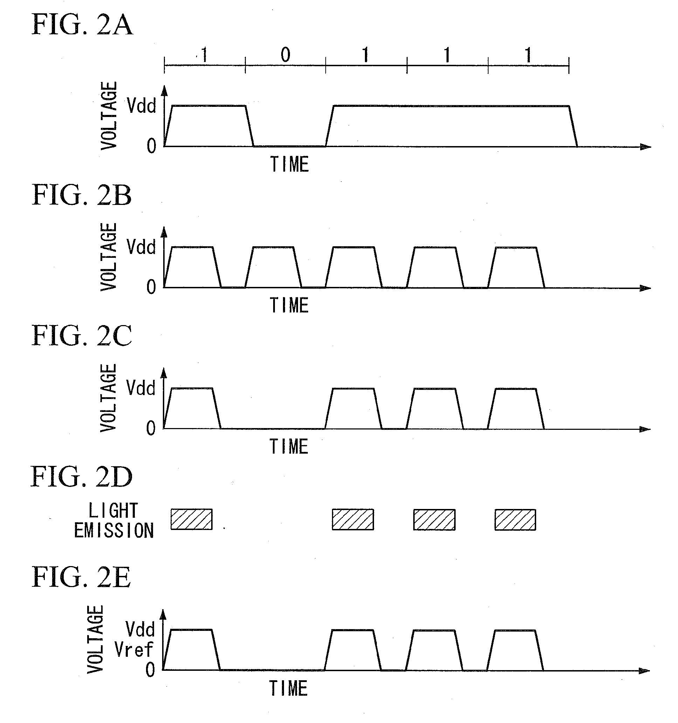

FIGS. 2A to 2E show operations of the data communication system according to the first embodiment of the present invention. FIG. 2A is a voltage waveform of a signal output from a 1-bit quantization section; FIG. 2B is a voltage waveform of clocks generated internally by a return-to-zero section; FIG. 2C is a voltage waveform of a signal output from a return-to-zero section obtained by obtaining a logical product of the signal waveform shown in FIG. 2A and the signal waveform shown in FIG. 2B; FIG. 2D is the light emission timing of a light emitting diode inside a transmitting section; and FIG. 2E is a voltage waveform of a signal output from a photo-diode inside a receiving section.
FIGS. 3A to 3C show an operation of a light receiving section when identical data is input continuously into a data communication system in the first embodiment of the present invention. FIG. 3A is a voltage waveform showing a movement of a reference voltage Vref when "1" is continuously input; FIG. 3B is a voltage waveform showing a movement of a reference voltage Vref when "0" is continuously input; FIG. 3C is a voltage waveform of a signal output from a voltage comparator inside a receiving section.
FIG. 4 is a block diagram showing the structure of a data communication system according to the second embodiment of the present invention.
FIG. 5 is a block diagram showing the structure of a data communication system according to the third embodiment of the present invention.
FIG. 6 is a circuit diagram showing a specific example of the pulse width extension section shown in FIG. 5.
FIG. 7 is a waveform diagram showing an operation of the circuit shown in FIG. 6.
FIG. 8 is a block diagram showing the structure of a data communication system according to the fourth embodiment of the present invention.
FIG. 9A is a circuit diagram showing a first specific structural example of the return-to-zero circuit shown in FIG. 8.
FIG. 9B is a waveform diagram showing an operation of the circuit shown in FIG. 9A.
FIG. 10 is a block diagram showing the structure of a data transmitting apparatus that uses a second specific structural example of the return-to-zero circuit shown in FIG. 8.
FIG. 11 is a waveform diagram showing a waveform of a signal output from the circuit shown in FIG. 10.
FIG. 12A is a circuit diagram showing a second specific structural example of the above return-to-zero circuit.
FIG. 12B is a waveform diagram showing an operation of the circuit shown in FIG. 12A.
FIG. 13 is a circuit diagram showing the structure when a circuit formed by the buffers and inverters shown in FIG. 8 is formed by three inverters.
FIG. 14 is a circuit diagram showing the structure of a differential low pass filter and a differential high pass filter in the data communication system according to the fifth embodiment of the present invention.
FIG. 15 shows an example of a power spectrum of an output signal that has passed through a noise shaping A/D converter and a return-to-zero circuit.
FIG. 16 is a circuit diagram showing the structure of another example of a differential low pass filter and a differential high pass filter in the data communication system according to the fifth embodiment of the present invention.
FIG. 17 is a block diagram showing the structure of a data communication system according to the sixth embodiment of the present invention when the speaker drive section is realized by three inverters and is driven by differentiation.
FIG. 18 is a block diagram showing the structure of another example of a data communication system according to the sixth embodiment of the present invention when the speaker drive section which performs differential drive is realized by one inverter.
FIG. 19 is a block diagram showing the structure on a data transmitting apparatus side in a data communication system according to the eighth embodiment of the present invention.
FIG. 20 is a block diagram showing another structural example on a data transmitting apparatus side in a data communication system according to the eighth embodiment of the present invention.
FIG. 21 is a block diagram showing the structure of a data communication system according to the ninth embodiment of the present invention.
FIG. 22 is a block diagram showing the structure of a data communication system according to the tenth embodiment of the present invention.
FIG. 23 is a block diagram showing a conventional analog data transmitting and receiving system.
FIG. 24 is a data structure diagram showing an example of a serial data stream.
FIG. 25 is a block diagram showing a structural example of a conventional data communication system obtained by improving the conventional analog data transmitting and receiving system shown in FIG. 23.
FIG. 26 is a block diagram showing a specific structural example of the data communication system shown in FIG. 25.
FIGS. 27A to 27C show operations of the infrared ray LED and the photo-diode shown in FIG. 26. FIG. 27A shows the light emission timing of an infrared ray LED; FIG. 27B shows the output voltage of a photo-diode when strong light is received; and FIG. 27C shows the output voltage of a photo-diode when weak light is received.
FIGS. 28A to 28C show an operation of a light receiving section when identical data is input continuously into the conventional data communication system shown in FIG. 26. FIG. 28A is a voltage waveform showing a movement of a reference voltage Vref when "1" is continuously input; FIG. 28B is a voltage waveform showing a movement of a reference voltage Vref when "0" is continuously input; and FIG. 28C is an output voltage waveform of the voltage comparator shown in FIG. 26.
FIGS. 29A to 29C show operations of a light emitting diode and a photo-diode when Manchester code is used. FIG. 29A is a waveform diagram showing an input voltage input into a light emitting diode; FIG. 29B shows a light emission timing of the light emitting diode; and FIG. 29C is a waveform diagram showing an output voltage of the photo-diode.

### DETAILED DESCRIPTION OF THE PREFERRED EMBODIMENTS

The respective embodiments of the present invention will now be described with reference made to the drawings.

### (First Embodiment)

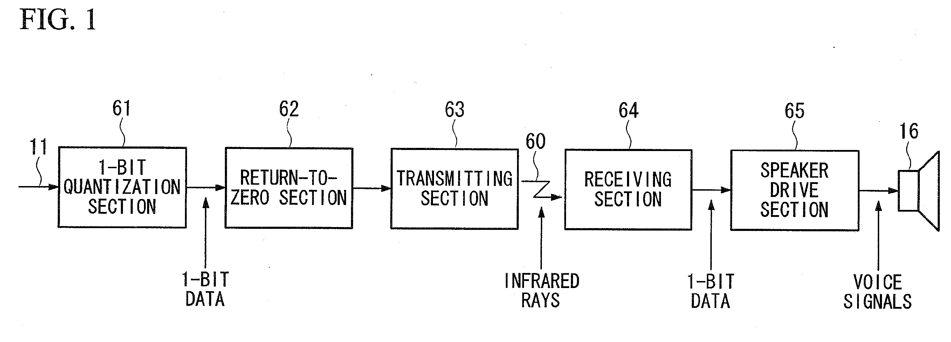

FIG. 1 is a block diagram showing the structure of a data communication system according to the first embodiment of the present invention. In this data communication system, a data transmitting apparatus and a data receiving apparatus are placed via a space 60, serving as a transmission path (communication vehicle). Namely, the data transmitting apparatus is formed by a 1-bit quantization section 61, a return-to-zero section 62, and a transmitting section 63, while the data receiving apparatus is formed by a receiving section 64, a speaker drive section 65, and a speaker 16.

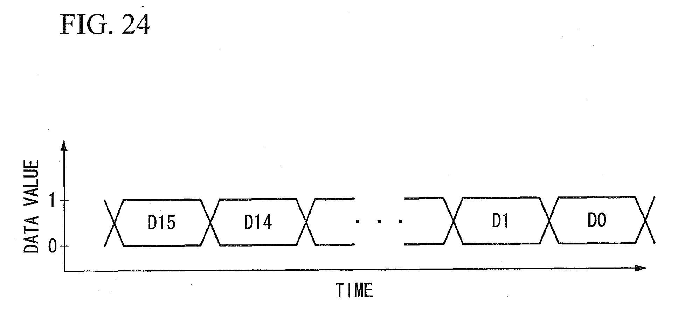

The 1-bit quantization section 61 converts voice signals 11 into pulse compressional waves such that the voice is transmitted through the air as air compressional waves. Namely, the output pulse trains become more dense as the level of the voice signals 11 is raised, and become more sparse as the level of the voice signals 11 is lowered. These pulse trains are the same as normal serial data streams, however, they are not developed serially as one group of data in several bits like those shown in FIG. 24, but, instead, are data formed by independent, individual items of data. Therefore, it is not necessary to append synchronous data showing the front position of one group of data, as was described with reference to FIG. 24.

Because output signals that have been converted using a noise shaping method are originally 1-bit, a parallel - serial conversion section is also not required. Accordingly, clock extraction by synchronous pattern on the receiving side is also not necessary resulting in the various calculation processes for data recovery being unnecessary and the clock recovery for receiving data is also unnecessary.

Furthermore, because the received data streams have a waveform serving as compressional waves of pulses of a constant amplitude, if the speaker 16 is driven by the speaker drive section 65 such as a low impedance driver with the waveform in this state, the voice signal reproduction circuit that includes the speaker 16 operates as a low pass filter and voice signal reproduction becomes possible in this state. The same function can be obtained even if the speaker drive section is a low pass filter or a high pass filter or has a structure that includes both of these.

Note that, in the present embodiment, infrared rays are used as a communication format for 1-bit quantized serial data streams. Here, provided that an infrared ray digital communication unit is used, then a variety of types of device can be used as the transmitting section 63 and the receiving section 64. Therefore, the transmitting section 63 and the receiving section 64 can have a structure such as that of the infrared transmitting section 13 and the infrared receiving section 14 shown in FIG. 26. The speaker drive section 65 can also have a structure such as that of the speaker drive section 15 shown in FIG. 26.

Analog signals such as voice or music or digital signals such as digitized voice or music are input as voice signals 11 into the 1-bit quantization section 61. The 1-bit quantization section 61 converts the input analog signals or digital signals into digital signals (compressional waves of pulses) that are 1-bit data streams using a noise shaping method. A high level output is made for logical values of "1" for these digital signals that have been converted into 1-bit data streams, and a low level output is made for logical values of "0". Note that signals output from the 1-bit quantization section 61 are non-return-to-zero (NRZ) signals.

When the non-return-to-zero signals output from the 1-bit quantization section 61 are high level signals, the return-to-zero section 62 converts them into return-to-zero (RZ) signals having a pulse width of, for example, 10% or more and less than 90%. When the non-return-to-zero signals output from the 1-bit quantization section 61 are low level signals, the return-to-zero section 62 outputs the input non-return-to-zero signals as they are. The transmitting section 63 outputs signals output from the return-to-zero section 62 by infrared rays into space 60. The receiving section 64 receives the infrared ray signals output from the transmitting section 63 via the space 60. Signals that are received by the receiving section 64 are input into the speaker drive section 65 that drives the speaker 16, and the speaker 16 is driven by an output from the speaker drive section 65.

In this way, the major difference between the present embodiment and the technology disclosed in Japanese Unexamined Patent Application, First Publications Nos. Hei 8-37502 and Hei 5-130041 is the fact that the present embodiment is provided with the return-to-zero section 62.

Next, a more detailed description will be given of the operation of each circuit in the data communication system shown in FIG. 1. If values obtained by quantizing voice signals 11 using the 1-bit quantizer section 61 are taken as "10111", as is shown in FIG. 2A, then the output waveform of FIG. 2A, which is similar to that shown in FIG. 27B, is output from the 1-bit quantization section 61. Note that in FIGS. 2A to 2C and 2E the vertical axis is voltage while the horizontal axis is time.

As is shown in FIG. 2B, the return-to-zero section 62 internally generates clocks whose duty ratio is 10% or more and less than 90%, and obtains the logical product of these clocks and the output waveform of the 1-bit quantization section 61. As a result, the waveform shown in FIG. 2C is obtained from the return-to-zero section 62. As is described below, the logical product can be easily obtained by using a two input AND circuit. Signals output from the return-to-zero section 62 are input into the transmitting section 63, and the light emitting diode inside the transmitting section 63 that transmits infrared rays into the space 60 emits light in accordance with the input signals at an emission timing such as that shown in FIG. 2D.

When these infrared rays are received by the photo-diode inside the receiving section 64 in the data receiving apparatus, as is shown in FIG. 2E, the same output signals as the waveform on the data transmitting apparatus side shown in FIG. 2C are obtained as the output of the photo-diode. Next, these output signals are input into the speaker drive section 65 and voice signals are reproduced by the speaker 16 being driven by the output from the speaker drive section 65.

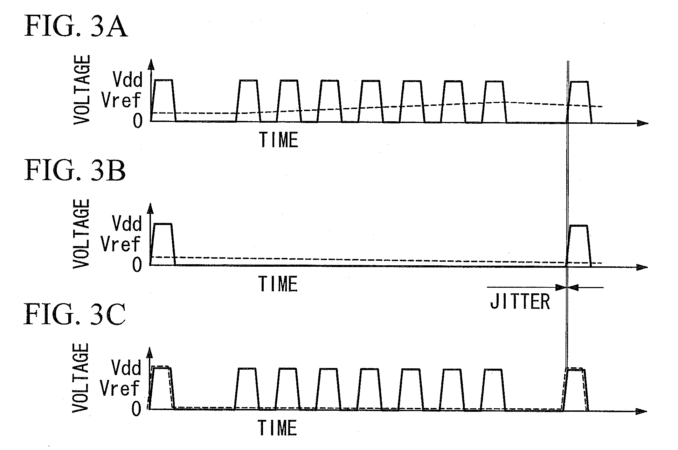

FIGS. 3A to 3C show relationships between a reference voltage Vref and outputs of the photo-diode inside the receiving section 64 when the same operation as is shown in FIGS. 28A to 28C was performed in the present embodiment, together with a voltage waveform output from a voltage comparator inside the receiving section 64. Note that in FIGS. 3A to 3C the vertical axis is voltage while the horizontal axis is time. In the same way as in FIG. 28C, the solid line in FIG. 3C shows the voltage waveform output from the voltage comparator in the receiving section 64 when "1" is input continuously, as shown in FIG. 3A. The broken line shown in FIG. 3C shows the voltage waveform output from the voltage comparator in the receiving section 64 when "0" is input continuously, as shown in FIG. 3B.

In the present embodiment, because the pulse width on the light receiving side is narrower than is the case conventionally, when "1" is input continuously, as is shown in FIG. 3A, the reference voltage Vref, which is the average value of the output voltages of the photo-diode, is smaller than the reference voltage Vref in FIG. 28A, as is shown by the broken line in FIG. 3A. In contrast, when "0" is input continuously, as is shown in FIG. 3B, the reference voltage Vref is the same as the reference voltage Vref in FIG. 28B, as is shown by the broken line in FIG. 3B. Because of this, in the present embodiment, the difference between the reference voltage Vref when "1" is continuously input and the reference voltage Vref when "0" is continuously input is smaller than is the case conventionally. As a result, when data for "01" is subsequently input in the same way as in FIGS. 28A to 28C, a difference in timing when "1" is detected by the voltage comparator decreases, and it is possible to greatly reduce jitter.

As described above, in a system such as that described for the conventional technology, jitter is generated because it is not possible to transmit 1-bit quantized signals using existing encoding technology for jitter suppression, such as Manchester coding. In contrast, in the present embodiment, by using a return-to-zero section, jitter is suppressed and high quality voice transmission is possible. This is the major difference between the present embodiment and the conventional technology.

### (Second Embodiment)

In the data communication system according to the second embodiment of the present invention, the transmitting section 63 and the receiving section 64 described in the first embodiment communicate in accordance with fast IrDA physical layer (FIR), which is a physical layer of the digital data infrared ray communication standard IrDA.

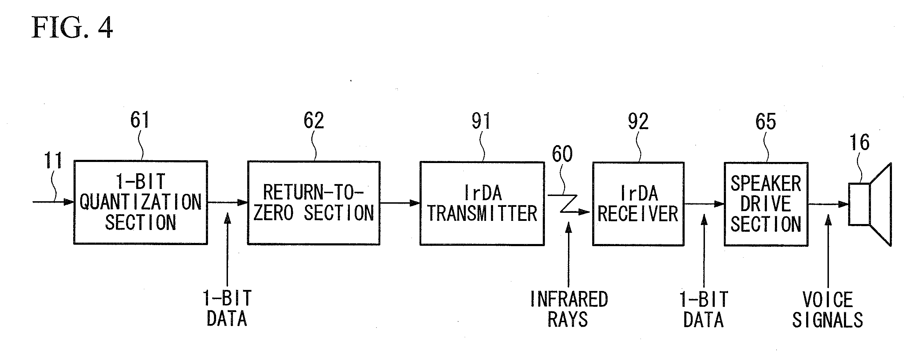

FIG. 4 is a block diagram showing the structure of a data communication system according to the present embodiment and component elements that are the same as those shown in FIG. 1 (i.e., the first embodiment) are given the same reference symbols. In FIG. 4, the transmitting section 63 and the receiving section 64 are formed respectively by an IrDA transmitter 91 and an IrDA receiver 92. The operation of the data communication system according to the present embodiment is the same as the operation of the data communication system according to the first embodiment, apart from the fact that IrDA-FIR is used, and, therefore, a description thereof is omitted here.

As the physical layer of the IrDA-FIR, the emission peak wavelength is regulated at 870 nm, the radiation intensity is regulated at 100 mW/sr, and the transfer speed is regulated at 1 Mbps to 4 Mbps. However, in the present embodiment, transfer at a speed of 1 Mbps or less is also possible. IrDA-FIR is a high speed infrared ray data transfer format that has become widely used in recent years as IrDA 1.1 in infrared ray communication between personal computers and personal digital assistants (PDA). As in the eighth embodiment which is described below, it has the advantage that the IrDA transmitter 91 or the IrDA receiver 92 can be replaced by a personal computer.

When an IrDA transmitter and receiver are used for the transmitting and receiving sections inside the data communication system, as in the present embodiment, the following advantages are obtained. There is a possibility that the receiving section 64 described in the first embodiment receives signals transmitted from devices other than data communication systems. Therefore, if high level signals are received from another device while the transmitting section 63 is transmitting a low level signal, then this is likely to cause malfunctions. In particular, because return-to-zero signals are transferred between the data transmitting apparatus and the data receiving apparatus in each embodiment of the present invention, the low level period is longer in comparison with non-return-to-zero signals, and there is a greater likelihood than signals from other devices will be received.

Here, as the standard for the IrDA physical layer, in addition to the aforementioned FIR with a transfer speed of 1 Mbps to 4 Mbps, there is also SIR with a transfer speed of 2.4 kbps to 115.2 kbps and MIR with a transfer speed of 576 kbps to 1.152 Mbps. Therefore, in the IrDA Standard it is stipulated that filters be built into the receiving section of each device so that devices that use FIR, devices that use SIR, and devices that use MIR can exist together. As a result, interference can be prevented by ensuring that signals other than those at the transfer speed used by each device are not received.

Because the IrDA receiver 92 is used as the receiving section 64 in the present embodiment, it is possible to remove signals at transfer speeds other than 1 Mbps to 4 Mbps using a filter incorporated in the IrDA receiver 92. Accordingly, the IrDA receiver 92 is unaffected, for example, by infrared rays transmitted from other devices such as remote controls for television or audio devices. Moreover, because IrDA transmitting and receiving units have become steadily smaller in recent years, both the data transmitting apparatus and the data receiving apparatus can be made small in size. Furthermore, in IrDA, data having 100% duty ratio is rejected, however, in each embodiment of the present invention, by providing the return-to-zero section 62 in front of the transmitting section 63 shown in FIG. 1, non-return-to-zero signals are converted into return-to-zero signals and then input into the transmitting section 63. Therefore, as in the present embodiment, whenever IrDA based communication is performed using the transmitting section 63, the transmitting section 63 can be realized without any special circuitry or the like having to be added other than the IrDA transmitter 91.

Note that it is preferable that a filter be provided inside the receiving section 64, in the same way as in the IrDA receiver, even if a device other than an IrDA transmitter or receiver is used as the transmitting or receiving sections.

### (Third Embodiment)

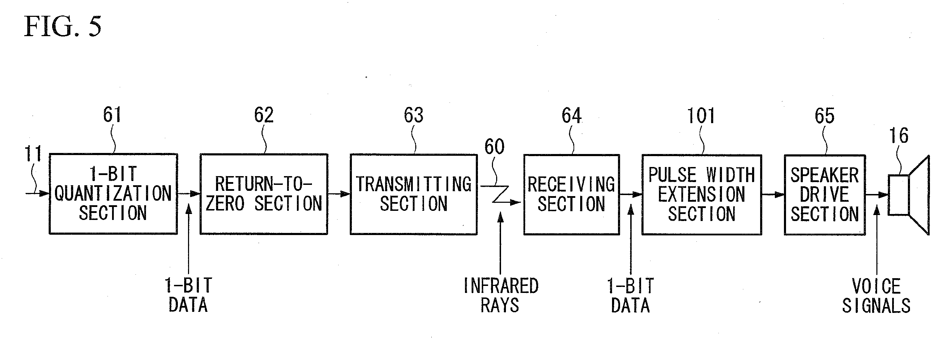

FIG. 5 is a block diagram showing the structure of a data communication system according to the third embodiment of the present invention. The same reference symbols are given to component elements that are identical to those appearing in FIG. 1 (i.e., in the first embodiment). In the present embodiment, a pulse width extension section 101 is placed between the receiving section 64 and the speaker drive section 65 of the structure shown in FIG. 1. By using this pulse width extension section 101, pulse widths that have been narrowed by the return-to-zero section 62 are extended so as to be converted into waveforms having 100% duty ratio like the original non-return-to-zero signals or having waveforms with close to 100% duty ratio. The signals then have the same waveform as the output of the 1-bit quantization section 61. The advantages of employing this structure are described below.

For example, if non-return-to-zero signals output from the 1-bit quantization section 61 are converted by the return-to-zero section 62 into return-to-zero signals having a duty ratio of 50%, the signal amplitude value obtained when the output from the receiving section 64 passes through the low pass filter incorporated in the speaker drive section 65 is half that obtained when the duty ratio is 100%. As a result, the sound pressure of voice signals output from the speaker 16 is attenuated 6 dB. For this reason, in the present embodiment, the pulse width extension section 101 is provided in addition to the return-to-zero section 62, and jitter can be reduced by reducing the duty ratio of transferred pulse signals by the return-to-zero section 62. At the same time, the pulse width of signals input into the speaker drive section 65 is extended by the pulse width extension section 101 enabling the maximum voice signal sound pressure to be obtained.

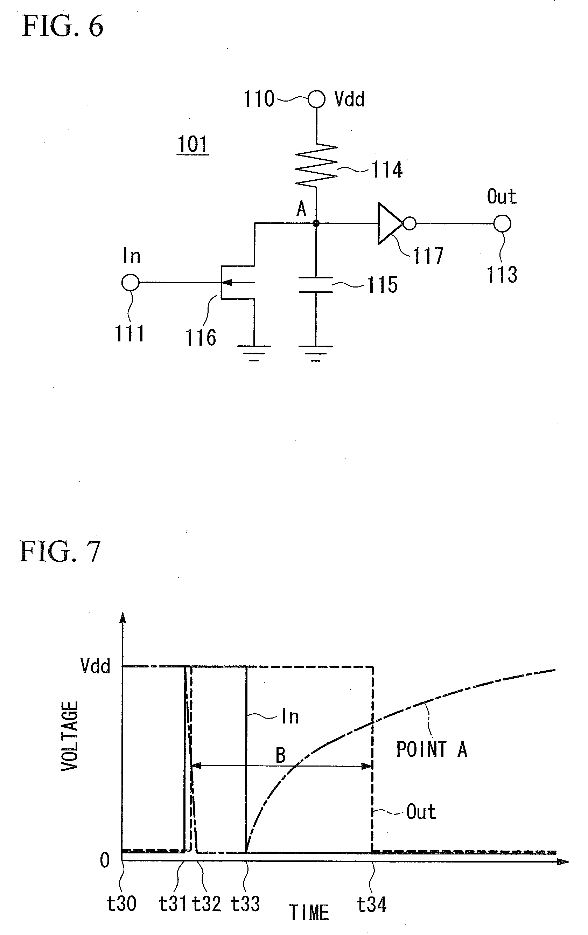

FIG. 6 is a circuit diagram shown a specific example of the pulse width extension section 101. The operation of the circuit shown in FIG. 6 will now be described with reference also made to the waveform diagram in FIG. 7. Note that, in FIG. 7, the vertical axis is voltage, the horizontal axis is time, the solid line is the voltage waveform of an input In (i.e., an output from the receiving section 64) supplied to an input terminal 111 shown in FIG. 6, the broken line is the voltage waveform of the output Out that is output to the speaker drive section 65 from an output terminal 113 shown in FIG. 6, and the long - short dash line is the voltage waveform at the point A in FIG. 6.

As shown in FIG. 7, as an initial state, at the timing t30 the input In is taken as a low level, the potential at the point A is taken as a high level, and the output Out is taken as a low level. In this state, a capacitor 115 is charged through a resistor 114 by a power supply voltage Vdd that is applied to a power supply terminal 110, so that the charge is accumulated in the capacitor 115. When the input In changes to a high level at the timing t31, an NMOS transistor 116 is turned on and the charge that was stored in the capacitor 115 is discharged. At the timing t32, the potential at the point A changes to a GND level and the output Out changes to a high level. Subsequently, at the timing t33, the input In changes to a low level and the NMOS transistor 116 is turned off. The capacitor 115 then continues to be charged in accordance with a time constant of a CR circuit formed by the capacitor 115 and the resistor 114, so that the potential at the point A continues to rise. At the timing t34, when the potential at the point A exceeds a threshold value of an inverter 117, the output Out changes to a low level. At this time, the pulse width extension section 101 can be realized if the time constant of the CR circuit is adjusted so that the pulse width B of the output Out is the same as if the duty ratio was 100% like the signals output from the 1-bit quantization section 61.

### (Fourth Embodiment)

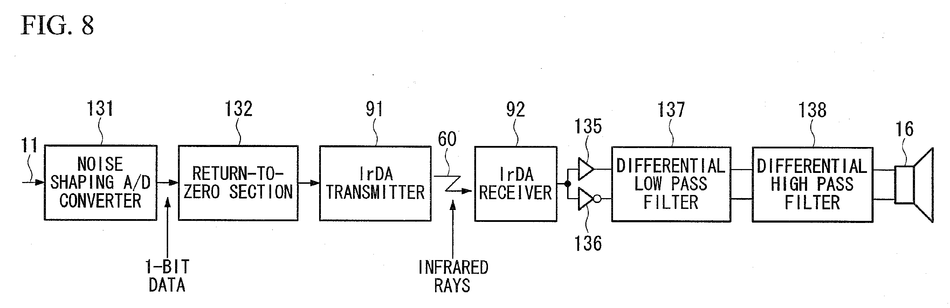

FIG. 8 is a block diagram showing the structure of a data communication system according to the fourth embodiment of the present invention. The same reference symbols are given to component elements that are identical to those appearing in FIG. 1 (i.e., in the first embodiment) and FIG. 4 (i.e., in the second embodiment). In the present embodiment, the component elements other than the speaker 16 that were described in the first embodiment in FIG. 1 are formed into specific circuits. Namely, in FIG. 8, a noise shaping A/D converter 131, a return-to-zero circuit 132, the IrDA transmitter 91 (see FIG. 4), and the IrDA receiver 92 (see FIG. 4) are used respectively as specific component examples of the 1-bit quantization section 61, the return-to-zero section 62, the transmitting section 63, and the receiving section 64 shown in FIG. 1. In FIG. 8, the speaker drive section 65 of FIG. 1 is realized by a buffer 135, an inverter 136, a differential low pass filter 137, and a differential high pass filter 138.

The noise shaping A/D converter 131 converts analog voice signals 11 such as voice or music into digital 1-bit data streams using a noise shaping method.

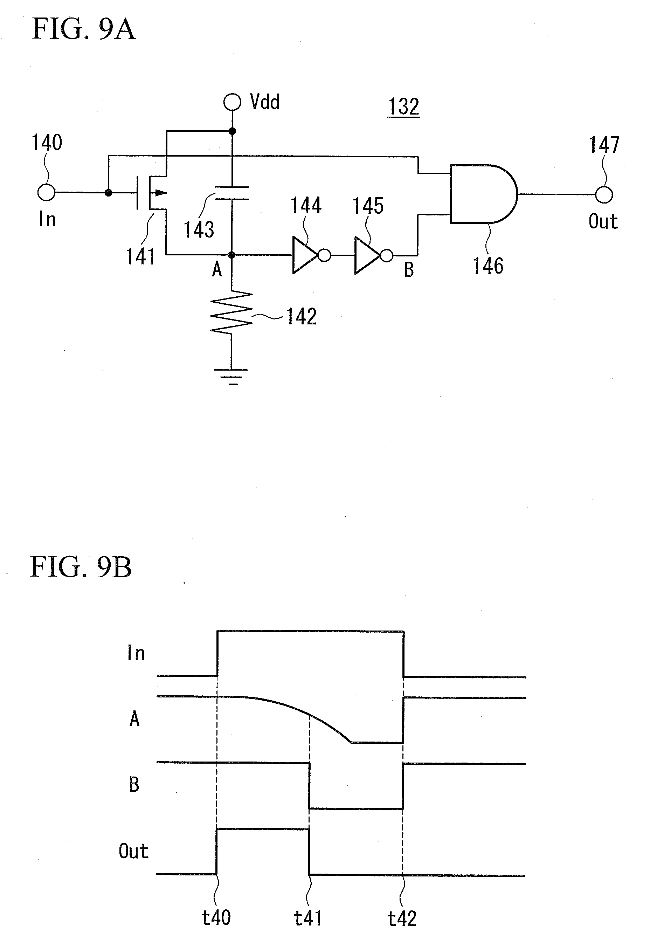

The return-to-zero circuit 132 can be realized, for example, by the circuit shown in FIG. 9A. The voltage waveforms of each section in the return-to-zero circuit 132 in this case are shown in FIG. 9B.

In the structure shown in FIG. 9A, the pulse width of return-to-zero signals output from the return-to-zero circuit 132 is determined by an RC time constant. As an initial state, the input In supplied to an input terminal 140 is taken as a low level. As a result, because a PMOS transistor 141 is turned on, the potential at the point A becomes a high level, and the potential at the point B also becomes a high level via the inverters 144 and 145. Because the input In at this time is at a low level, the output Out that is output from an AND circuit 146 to an output terminal 147 is at a low level.

Subsequently, when the input In changes to a high level at the timing t40, because the potential at the point B at this time is a high level, the AND circuit 146 outputs a high level as the output Out. In addition, because the input In is a high level, the PMOS transistor 141 is turned off, a capacitor 143 is charged by a time constant of an RC circuit formed by the resistor 142 and the capacitor 143, and the potential at the point A is gradually reduced. When the potential at the point A at the timing t41 goes below the threshold value of the inverter 144, the output from the inverter 144 changes to a high level and the potential at the point B, which is the output from the inverter 145 changes to a low level. As a result, the output Out is restored to a low level. Subsequently, when the input In changes to a low level at the timing t42, the same operation as was described in the initial state is performed and a state that is the same as the initial state is restored.

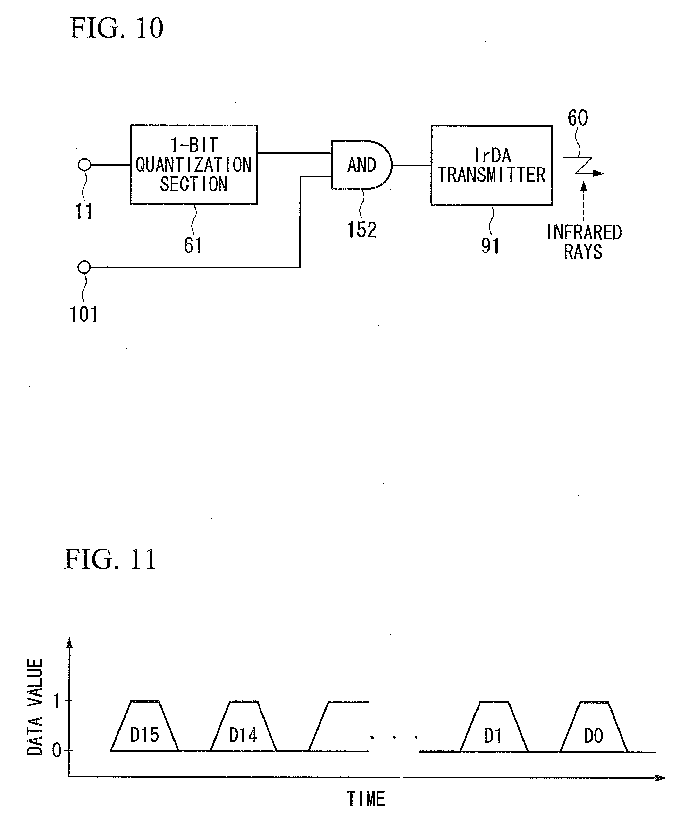

Alternatively, a structure such as that shown in FIG. 10 may be employed. In this case, by obtaining a logical product of the 1-bit data streams output from the 1-bit quantization section 61 and the clock signals 101 using an AND circuit 152, when clock signals 101 having the waveform shown in FIG. 2B are at a high level, data values from the 1-bit quantization section 61 are passed along as they are. When the clock signals 101 are at a low level, "0" is always output regardless of the output from the 1-bit quantization section 61. As a result, as shown in FIG. 11, it is possible to make a duty ratio of an incoming data stream, for example, into a 50% duty ratio even when signals having a 100% duty ratio (for example, an NRZ signal) arrive.

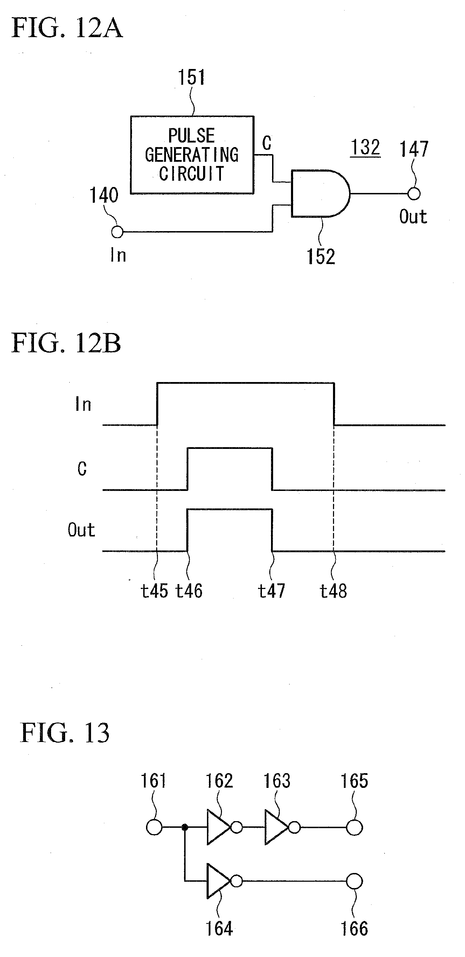

Note that the clock signals 101 can be generated, for example, by a pulse generating circuit 151, such as is shown in FIG. 12A, and the voltage waveform in each section in FIG. 12A in this case is shown in FIG. 12B. In the return-to-zero circuit shown in FIG. 12A, the pulse width of the output Out is determined by the pulse width of clock signals generated by the pulse generating circuit 151. Namely, the input In from the noise shaping A/D converter 131 is at a high level from the timing t45 through to the timing t48, and the pulse generating circuit 151 outputs high level pulses from the timing t46 through to the timing t47 to the point C. Therefore, the output Out that is output to the IrDA transmitter 132 is at a high level from the timing t46 through to the timing t47.

The differential low pass filter 137 and the differential high pass filter 138 are both filters for dealing with voice and music bands (i.e., for audible bands) and the specific structures and operations thereof are described further in the fifth embodiment.

Next, the operation of the data communication system shown in FIG. 8 will be described. Voice signals 11 are input into the noise shaping A/D converter 131. The noise shaping A/D converter 131 converts the voice signals 11 into non-return-to-zero digital signals of a 1-bit data stream and then outputs these signals. These non-return-to-zero digital signals of a 1-bit data stream are input into the return-to-zero circuit 132 where they are converted into return-to-zero signals. The output of this return-to-zero circuit 132 is input into the IrDA transmitter 91, and the IrDA transmitter 91 emits infrared rays having a wavelength of 870 nm in accordance with IrDA -FIR. As described above, an IrDA transmitting and receiving unit that satisfies standards such as IrDA 1.1 and the like can be used as the IrDA transmitter 91, and the emitted infrared rays are received by an IrDA receiver 92 that satisfies standards such as IrDA 1.1 in the same way as the IrDA transmitter 91. The reception output of the IrDA receiver 92 is then input into the buffer 135 and the inverter 136 and are converted into differential signals. Outputs from the buffer 135 and the inverter 136 are then input into the differential low pass filter 137 and shaped quantization noise (described below in detail) is removed. The output of the differential low pass filter 137 is input into the differential high pass filter 138 and the pulse frequency signal component (described below in detail) is removed. The output from the differential high pass filter 138 is then input into the speaker 16 and voice signals are output from the speaker 16.

The buffer 135 and the inverter 136 can be formed by three inverters 162, 163, and 164 as is shown in FIG. 13. Of these inverters, the inverter 162 and the inverter 163 correspond to the buffer 135 shown in FIG. 8, and the inverter 164 corresponds to the inverter 136 in FIG. 8.

Moreover, the same operation as shown in FIG. 8 is obtained even if the differential low pass filter 137 and the differential high pass filter 138 in FIG. 8 are replaced.

### (Fifth Embodiment)

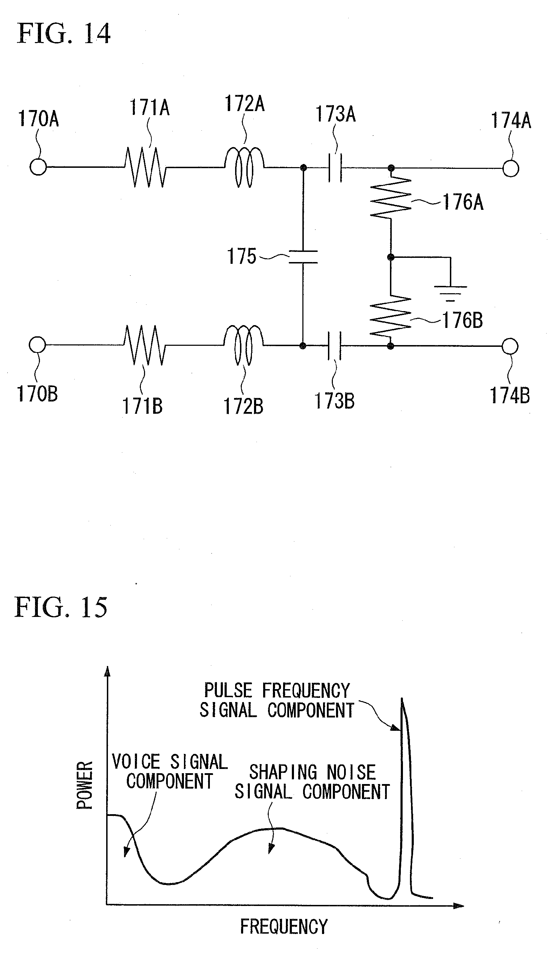

The present embodiment is a specific structural example of the differential low pass filter 137 and the differential high pass filter 138 shown in FIG. 8 (i.e., the fourth embodiment). FIG. 14 is a circuit diagram showing the structure of the differential low pass filter 137 and the differential high pass filter 138 of the fifth embodiment according to the present invention.

As is shown in FIG. 14, a resistor 171A, a coil 172A, and a capacitor 173A are connected in series between a differential input terminal 170A and a differential output terminal 174A. A resistor 171B, a coil 172B, and a capacitor 173B are connected in series between a differential input terminal 170B and a differential output terminal 174B. A capacitor 175 is placed between the connection point of the coil 172A and the capacitor 173A and the connection point of the coil 172B and the capacitor 173B. A resistor 176A is placed between the differential output terminal 174A and the GND, and a resistor 176B is connected between the differential output terminal 174B and the GND.

This circuit is a high pass filter and a low pass filter that uses R, L, and C elements, and, by applying it to the data receiving apparatus according to each embodiment of the present invention, the special effects described below, which are not obtained from the conventional technology are manifested.

The waveform of voice signals 11 converted by the noise shaping A/D converter 131 and the return-to-zero circuit 132 have a voice signal component, a shaping noise signal component, and a pulse frequency signal component as spectrum components, as is shown in FIG. 15. Among these signal components, the power of the pulse frequency signal component is one digit larger than the power of the other signal components and because the pulse frequency signal component does not contain a voice signal component, if it is consumed as power then it ends up becoming reactive power. Because of this, in the present embodiment, an inductance component made up of the coil 172A and the coil 172B is inserted. Because the frequency band of the pulse frequency signal component is several MHz, impedance that includes inductance is extremely large in this frequency band. Accordingly, in this frequency band, current does not flow by the operation of the coil 172A and the coil 172B and the power consumption of this pulse frequency signal component is extremely small.

However, it is difficult using only a filter based on inductance, such as that described above, to remove, in particular, portions in the vicinity of a voice signal component from shaped quantized noise (the shaping noise signal component in FIG. 15) distributed in an area slightly larger than and including the vicinity of the voice signal component. This is because the attenuation of the filter formed by the coil 172A and the capacitor 175 is expressed by 1/(4π²f²LC) and is proportionate to f² (wherein f is frequency, L is the inductance of the coil 172A, and C is the capacitance of the capacitor 175). Therefore, in the present embodiment, in order to remove the shaping noise signal component in the vicinity of the voice signal component, an RC low pass filter formed by the resistors 171A and 171B and by the capacitor 175.

The resistor 171A and the resistor 171B are each connected in serial with the coil 172A and the coil 172B, and are positioned before the capacitor 175 as seen from the differential input terminals 170A and 170B. Therefore, the current of the pulse frequency signal component flowing in the resistor 171A and the resistor 171B is restricted to an extremely small quantity by the coil 172A and the coil 172B, and there is no power consumption by the pulse frequency signal component in the resistor 171 A and the resistor 171B. In contrast, if the speaker drive section 65 is formed by the buffer 135 and the inverter 136, as is the case in the fourth embodiment, then when the IrDA receiver 92 is not receiving light, the output of the buffer 135 is the power supply level and the output of the inverter 136 is the GND level.

Here, because dynamic type speakers that are normally used are equivalent to inductance components, they show extremely low impedance to direct current. Moreover, because the coil 172A and the coil 172B also show low resistance to direct current, then when the IrDA receiver 92 is not receiving signals a large direct current ends up flowing in the speaker 16 and in the buffer 135 and the inverter 136 that form the speaker drive section. Therefore, in the present embodiment, a high pass filter is formed by the capacitor 173A and the capacitor 173B and by the resistor 176A and the resistor 176B so as to prevent the flow of direct current.

In this way, when signals that have undergone noise shaping and return-to-zero processing are supplied to the buffer 135 and the inverter 136 to drive the speaker 16, by inserting a filter such as that described above between the speaker drive section and the speaker 16, power can be reduced by a far greater amount than when an LRC filter is inserted in a normal circuit.

Note that, in FIG. 14, the same effect is obtained if coils 172A and 172B that have high inductance and have the same impedance in the low frequency range as the resistors 171A and 171B are used instead of providing the resistors 171A and 171B.

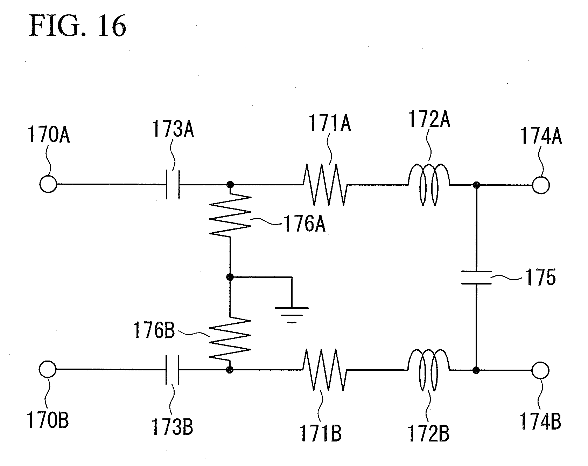

Moreover, a specific circuit obtained by replacing the differential low pass filter 137 and the differential high pass filter 138 in FIG. 8 is shown in FIG. 16. Note that, in FIG. 16, the same reference symbols have been given to component elements that are the same as those in FIG. 14. As is clear from FIG. 16, a differential high pass filter formed by the capacitor 173A and the capacitor 173B and by the resistor 176A and the resistor 176B is placed on the side of the differential input terminals 170A and 170B, and a differential low pass filter formed by the resistor 171A and the resistor 171B and by the coil 172A and the coil 172B and by the capacitor 175 is placed on the side of the differential output terminals 174A and 174B.

### (Sixth Embodiment)

As was described in the fifth embodiment, it is desirable that the differential low pass filter 137 and the differential high pass filter 138 be positioned in front of the speaker 16, however, the present invention is not limited to this structure.

For example, it is also possible to insert either a low pass filter or high pass filter, which are formed by a capacitor and a resistor or coil that have a structure different from those shown in FIGS. 14 and 16, or to insert both a high pass filter and a low pass filter between the speaker drive section 65 and the speaker 16.

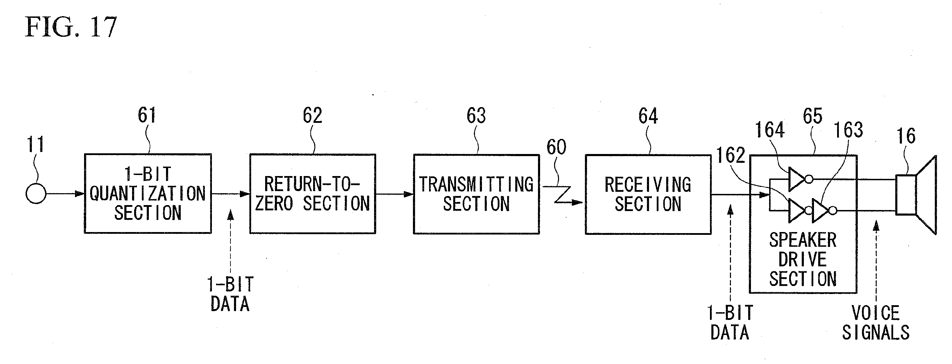

Alternatively, as is shown in FIG. 17, it is also possible to omit the low pass filter or high pass filter and to connect the speaker drive section 65 having a structure such as that shown in FIG. 13, for example, directly to the speaker 16. As a result, it becomes possible to differentially drive the speaker 16, which has low input impedance, using an extremely simplified structure, for example, three inverters.

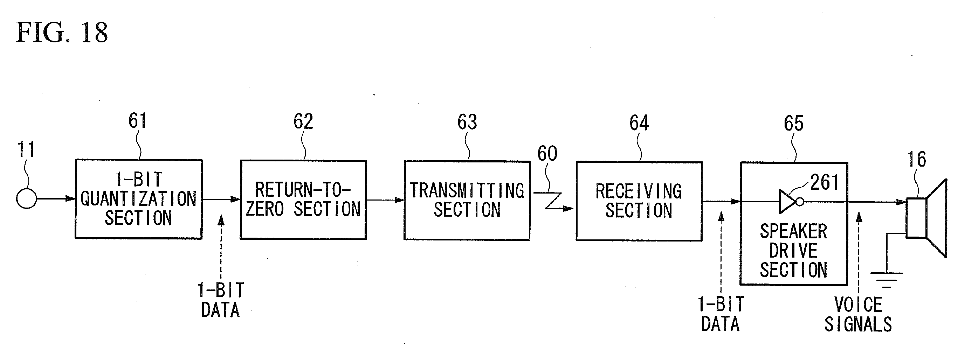

In the above description, the speaker 16 is driven differentially, however, the present invention is not limited to this structure, and it is also possible to form the speaker drive section 65 using, for example, just one inverter 261, as is shown in FIG. 18. In this case, it is sufficient if the speaker 16 is driven just by pulse trains output from the receiving section 64 and, when driving a low input impedance speaker, this is done extremely simply by one inverter.

### (Seventh Embodiment)

In the first embodiment the duty ratio of return-to-zero signals output from the return-to-zero section 62 was 10% or more and less than 90%, however, the duty ratio is not limited to this range and, theoretically, if the duty ratio is anything other than 0% and 100%.

However, from the viewpoint of power consumption, it is preferable that the duty ratio of signals output from the return-to-zero section 62 or from the return-to-zero circuit 132 is made as small as possible and is restricted, for example, 10% or more and 50% or less. This allows the drive power of the light emitting diode provided inside the IrDA transmitter 91 to be considerably reduced. Currently, to operate both the noise shaping A/D converter 131 and the return-to-zero circuit 132 at several tens of milli-watts, power consumption of 1W or more is required if 100% duty ratio infrared rays are emitted using an IrDA 1.1 Standard infrared ray emitter. Therefore, for example, if the duty ratio of signals output from the return-to-zero circuit 132 is set at 25%, it is possible to reduce the power consumption of the infrared ray emitter to one quarter, namely, to 250 mW. This is a major feature obtained by using the return-to-zero section or return-to-zero circuit in each of the above embodiments that is not available from the conventional technology.

In addition, from the viewpoint of noise characteristics, by making the duty ratio of signals output from the return-to-zero section 62 or the return-to-zero circuit 132 less than 40%, an even better noise suppression effect is obtained. Accordingly, it is preferable that the duty ratio be 5% or more and less than 40%.

Furthermore, from the viewpoint of circuit design, it is convenient if the duty ratio is { (m/2ⁿ) x 100} % (wherein m and n are natural numbers that satisfy in < 2ⁿ), for example, 75%, 50%, or 25%.

### (Eighth Embodiment)

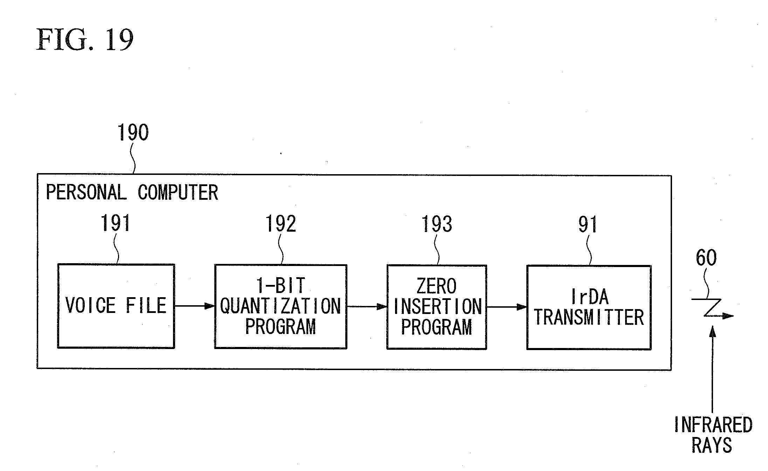

In the present embodiment, since the IrDA Standard infrared ray transmitter and receiver are installed in an ordinary personal computer or a small sized PDA or the like, the 1-bit quantization section 61 and return-to-zero section 62 shown in FIG. 1 (i.e., the first embodiment) are achieved by application software, and transmissions are made by the IrDA transmitter installed in the personal computer functioning as the transmitting section 63. FIG. 19 is a block diagram showing the structure of the data transmitting apparatus of the data communication system according to the present embodiment. Note that the structure of the data receiving apparatus is the same as in each of the above described embodiments.

A personal computer 190 has a voice file 191 obtained by digitizing voice or music stored on internal memory or on a storage medium such as a disk; a 1-bit quantization program 192 that reads digital data stored in the voice file 191 and performs noise shaping processing using a software program; a zero insertion program 193 that inserts data representing a "0" for each bit of the 1-bit data streams that have undergone noise shaping processing; and an IrDA transmitter 91 the same as that shown in FIG. 8. Specifically, the zero insertion program 193 inserts data representing a "0" before each bit of the 1-bit data streams. Alternatively, the zero insertion program 193 inserts data representing a "0" after each bit of the 1-bit data streams. Output data that has been processed by the zero insertion program 193 is output from the IrDA transmitter 91 at twice the speed of the noise shaping frequency. As a result, it is possible to output 1-bit data streams that have undergone noise shaping processing and having a duty ratio of 50% from the IrDA transmitter 91 in accordance with FIR.

By employing the structure of the present embodiment, because it is possible to make the physical layers of communication uniform with the IrDA installed in the personal computer, a data transmitting apparatus can be achieved without adding I/O devices using software that operates on a personal computer. Namely, it is possible to form the data transmission apparatuses of each of the above described embodiments simply by installing application software having the above described functions on a personal computer without having to provide special hardware.

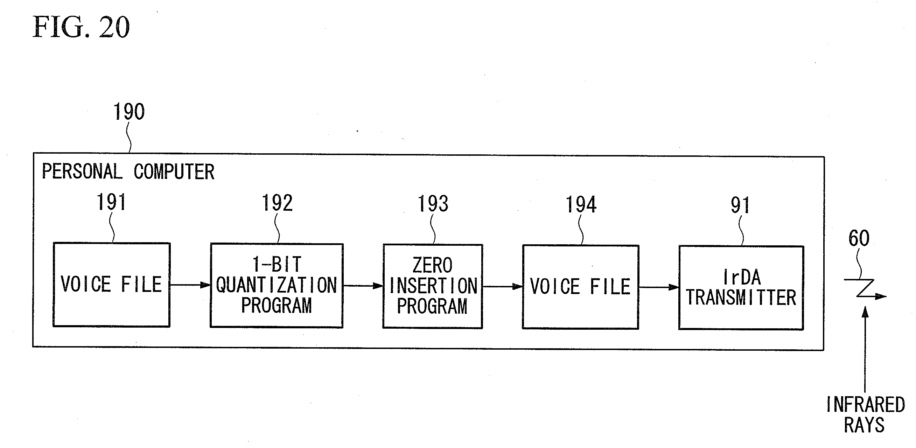

Note that in FIG. 19 the output of the zero insertion program 193 is supplied directly to the IrDA transmitter 91, however, the present invention is not limited to this structure. For example, as is shown in FIG. 20, it is also possible to provide a voice file 194 between the zero insertion program 193 and the IrDA transmitter 91 and to temporarily store data that has been processed by the zero insertion program 193 in the voice file 194. The data stored in the sound file 194 is then read at a suitable timing, and is transmitted from the IrDA transmitter 91.

Furthermore, in the above description, a case is described in which the duty ratio is taken as 50%, however, if this is generalized and p (wherein p is a natural number) number of "0" are inserted at the same time as output data is output from the IrDA transmitter 91 at a speed of (p + 1) times the noise shaping frequency, then a duty ratio of {100/ (p + 1)} % is obtained. Accordingly, it is possible to obtain the desired duty ratio by appropriately setting the value of p.

Moreover, in the above description, the 1-bit quantization section 61 and the return-to-zero section 62 are achieved by software programs, however, it is also possible for the return-to-zero section 62 alone to be achieved by a software program.

It is also possible for the 1-bit quantization program 192 and/or the zero insertion program 193 to be recorded on a computer readable medium, and for the programs recorded on this recording medium to be loaded on a computer system and to be executed by the computer system. Note that a computer system includes OS and hardware such as peripheral devices.

The term "computer readable recording medium" refers to a transportable medium such as a flexible disk, a magneto-optical disk, ROM, a CD-ROM, and the like, or to a storage apparatus such as a hard disk installed in a computer system. "Computer readable recording medium" also includes mediums that hold programs for a certain period of time such as volatile memory (RAM) in a computer system which is a server or a client when programs are transmitted via a communication line such as a telephone line or a network such as the Internet.

Moreover, each of the above programs may also be transferred from a computer system having a storage apparatus or the like on which these programs are stored via a transfer medium, or via a transfer wave in the transfer medium to another computer system. Here, the transfer medium that transfers the programs is a medium having a function of transferring information such as a communication line like a telephone or a network such as the Internet.

Moreover, the above programs may also be designed to perform a portion of the aforementioned function. They may also be what is known as a differential file (differential program) that can achieve these functions in combination with a program that is already recorded on a computer system.

### (Ninth Embodiment)

In each of the above described embodiments a description is given using an example of a data communication system that uses infrared rays, however, the present invention is not limited to this structure and, instead of infrared rays, it is possible to use light (i.e., visible light), ultraviolet rays, radio waves, and magnetic waves and the like. Namely, it is sufficient if the transmitting section 63 shown in FIG. 1 modulates 1-bit digital data streams using a predetermined modulation format and then emits light, ultraviolet rays, radio waves, and magnetic waves or the like into space or the like. Moreover, it is sufficient if the receiving section 64 shown in FIG. 1 receives light, ultraviolet rays, radio waves, and magnetic waves or the like that have been emitted into space or the like, and demodulates these so as to obtain the original 1-bit digital data streams.

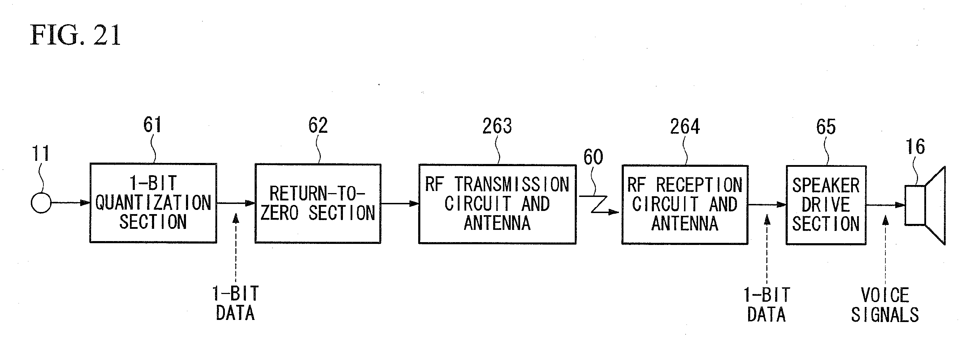

FIG. 21 is a block diagram showing the structure of the data communication system according to the ninth embodiment of the present invention. The same reference symbols have been used for the same component elements that also appear in FIG. 1 (the first embodiment). In the present embodiment, a transmitter having an RF transmission circuit and antenna 263 that modulates signals output from the return-to-zero circuit 62 using a format such as FSK, amplitude key shifting (ASK), phase key shifting (PSK) or the like and then transmits these signals is used as the transmitting section 63 shown in FIG. 1. In addition, a receiver having an RF reception circuit and antenna 264 that receives signals and demodulates them using the FSK, ASK, or PSK formats is used as the receiving section 64 shown in FIG. 1. This transmitter and receiver can be structured using conventional radio wave based data transmitting and receiving units. The operation of the data communication system of the present embodiment is the same as the operation of the data communication system of the first embodiment except that radio waves are used instead of the infrared rays used in the first embodiment.

### (Tenth Embodiment)

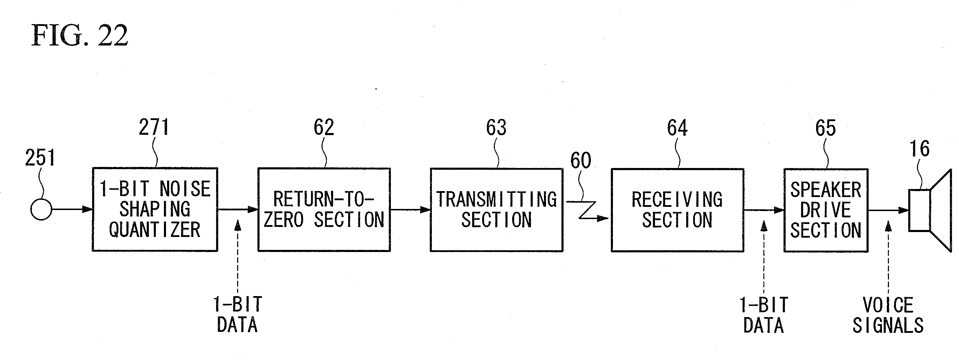

FIG. 22 is a block diagram showing the structure of the data communication system according to the tenth embodiment of the present invention. The same reference symbols have been used for the same component elements that also appear in FIG. 1 (the first embodiment). In the present embodiment, input into the data communication system is not analog signals, but is made up by digital signals of several bits (the digital voice signals 251 in FIG. 22) obtained by performing binary conversion on analog signals such as voice, music, and the like. Moreover, in the present embodiment, a 1-bit noise shaping quantizer 271 that converts digital signals of several bits into 1-bit digital data streams is used as the 1-bit quantization section 61 shown in FIG. 1. The operation of the data communication system of the present embodiment is the same as the operation of the data communication system of the first embodiment except that digital signals of several bits are input.

In each of the embodiments described above, a description is given of voice or music signals with a speaker being used as the output device, however, it is of course possible for the present invention to be applied when a pen recorder or the like is used instead of a speaker when analog data other than voice signals, for example, data that varies like analog data is measured.

The respective embodiments of the present invention have been described above in detail, however, the specific structure of the present invention is not limited to the above described embodiments and a variety of structures may be included insofar as they do not deviate from the gist of the present invention. For example, it is to be understood that appropriate combinations of the above described embodiments may also suffice.

## Claims

1. A data communication method comprising the steps of:
on a transmitting side, converting analog signals comprising voice or music or digital signals obtained by digitizing voice or music into non-return-to-zero digital signals formed by 1-bit data streams using a noise shaping method;
on the transmitting side, using a high level for converted digital signals of "1" and using a low level for converted digital signals of "0", and when a high level is used the converted digital signals are converted into return-to-zero signals having a pulse width smaller than the pulse width of non-return-to-zero signals and then the return-to-zero signals are output, and when a low level is used the converted digital signals are output as they are at a low level;
on the transmitting side, transmitting the output signals as radio signals;
on a receiving side, receiving the radio signals from the transmitting side; and
on the receiving side, driving a musical sound output section by electrical signals obtained from the received signals so as to convert the electrical signals into musical sound signals.

2. A data transmitting apparatus comprising:
a 1-bit conversion section that converts analog signals comprising voice or music or digital signals obtained by digitizing voice or music into non-return-to-zero digital signals formed by 1-bit data streams using a noise shaping method;
a return-to-zero section that uses a high level for converted digital signals of "1" and a low level for converted digital signals of "0", and for a high level converts the converted digital signals into return-to-zero signals having a pulse width smaller than the pulse width of non-return-to-zero signals and then outputs the return-to-zero signals, and for a low level outputs the converted digital signals as they are at a low level, and
a radio transmitting section that outputs the return-to-zero digital signals as radio signals.

3. The data transmitting apparatus according to claim 2, wherein the radio transmitting section is an infrared ray transmitting section that transmits the return-to-zero digital signals in accordance with the physical layers of Fast IrDA Physical Layer (FIR), which is a digital infrared ray communication standard.

4. The data transmitting apparatus according to claim 2, wherein the return-to-zero section makes the pulse width of the return-to-zero digital signals for the high level between 10% or more and less than 90% of the pulse width of non-return-to-zero signals.

5. The data transmitting apparatus according to claim 2, wherein the return-to-zero section makes the pulse width of the return-to-zero digital signals for the high level between 5% or more and less than 40% of the pulse width of non-return-to-zero signals.

6. A data transmitting program comprising:
a zero insertion function in which a number p (wherein p is a natural number) of data representing "0" are inserted for each bit in a 1-bit data stream obtained by performing noise shaping processing on analog signals comprising voice or music or digital signals obtained by digitizing voice or music; and
a transmitting function in which, by sending 1-bit data streams in which the "0" data have been inserted at a speed of (p + 1) times a noise shaping frequency used by the noise shaping processing to a radio transmitting section, return-to-zero digital signals are transmitted in which the pulse width at high level is { 100/ (p + 1) } % the pulse width at high level of non-return-to-zero signals.

7. The data transmitting program according to claim 6, wherein there is further provided a 1-bit quantization function that generates the 1-bit data stream by performing the noise shaping processing on the analog signals or digital signals.

8. A data receiving apparatus comprising:
a radio receiving section that receives by radio return-to-zero digital signals obtained by converting analog signals comprising voice or music or digital signals obtained by digitizing voice or music into digital signals formed by 1-bit data streams, and in which for a logic value of "0" a low level is allocated, while for a logic value of "1" a high level having a pulse width smaller than the pulse width of non-return-to-zero signals is allocated;
a musical sound output section that converts electrical signals into musical sound signals; and
a drive section that generates return-to-zero drive signals as the electrical signals to drive the musical sound output section based on the return-to-zero digital signals received by the radio receiving section.

9. The data receiving apparatus according to claim 8, wherein the radio receiving section is an infrared ray receiving section that receives by radio the return-to-zero digital signals in accordance with the physical layers of Fast IrDA Physical Layer (FIR), which is a digital infrared ray communication standard.

10. The data receiving apparatus according to claim 8, wherein there is further provided a pulse width extension section that extends pulse widths of high level drive signals that have a pulse width of less than 100% of the pulse width of high level non-return-to-zero signals to a pulse width of 100% that of the non-return-to-zero signals or a pulse width near to 100% that of the non-return-to-zero signals, and then outputs them to the drive section.

11. The data receiving apparatus according to claim 8, wherein there is further provided a filter section having a high pass filter that removes a DC component contained in the drive signals, and a low pass filter that removes shaping noise signal components in a vicinity of voice signal components contained in the drive signals.

12. The data receiving apparatus according to claim 11, wherein the filter section is provided with:
a first resistor having one end terminal connected to a first input terminal;
a first inductor having one end terminal connected to another end terminal of the first resistor;
a first capacitor having one end terminal connected to another end terminal of the first inductor;
a second resistor having one end terminal connected to a second input terminal;
a second inductor having one end terminal connected to another end terminal of the second resistor;
a second capacitor having one end terminal connected to another end terminal of the second inductor;
a third capacitor placed between the other end terminal of the first inductor and the other end terminal of the second inductor;
a third resistor placed between another end terminal of the first capacitor and a ground;
a fourth resistor placed between another end terminal of the second capacitor and a ground,
wherein the other end terminal of the first capacitor is made a first output terminal, and the other end terminal of the second capacitor is made a second output terminal.

13. The data receiving apparatus according to claim 11, wherein the filter section is provided with:
a first capacitor having one end terminal connected to a first input terminal;
a first resistor placed between another end terminal of the first capacitor and a ground;
a second resistor having one end terminal connected to the other end terminal of the first capacitor;
a first inductor having one end terminal connected to another end terminal of the second resistor;
a second capacitor having one end terminal connected to a second input terminal;
a third resistor placed between another end terminal of the second capacitor and the ground;
a fourth resistor having one end terminal connected to the other end terminal of the second capacitor;
a second inductor having one end terminal connected to another end terminal of the fourth resistor; and
a third capacitor placed between another end terminal of the first inductor and another end terminal of the second inductor,
wherein the other end terminal of the first inductor is made a first output terminal, and the other end terminal of the second inductor is made a second output terminal.
